# EUROPÄISCHE PATENTSCHRIFT

(11) **EP 1 151 190 B1**
(45) Veröffentlichungstag und Bekanntmachung des Hinweises auf die Patenterteilung: **04.05.2005**
(21) Anmeldenummer: 00989799.2
(22) Anmeldetag: 23.11.2000
(51) Int. Cl.: F02M 51/06

(54) **BRENNSTOFFEINSPRITZVENTIL**
FUEL INJECTION VALVE
SOUPAPE D'INJECTION DE CARBURANT

(30) Priorität: 27.11.1999 DE 19957172
(43) Veröffentlichungstag der Anmeldung: 07.11.2001
(73) Patentinhaber: ROBERT BOSCH GMBH, 70442 Stuttgart (DE)
(72) Erfinder: STIER, Hubert, 71679 Asperg (DE); HOHL, Guenther, 70569 Stuttgart (DE); KEIM, Norbert, 74369 Loechgau (DE)
(86) Internationale Anmeldenummer: PCT/DE2000/004142
(87) Internationale Veröffentlichungsnummer: WO 2001/038722

(56) Entgegenhaltungen:
- DE-A- 19 626 576
- DE-A- 19 723 405
- FR-A- 2 373 689
- US-A- 5 730 091
- US-A- 5 975 055

## Beschreibung

### Stand der Technik

Die Erfindung geht aus von einem Brennstoffeinspritzventil nach der Gattung des Hauptanspruchs.

Aus der DE 196 26 576 A1 ist bereits ein elektromagnetisch betätigbares Brennstoffeinspritzventil zum direkten Einspritzen von Brennstoff in den Brennraum einer Brennkraftmaschine bekannt, bei welchem zur elektromagnetischen Betätigung ein Anker mit einer elektrisch erregbaren Magnetspule zusammenwirkt und der Hub des Ankers über eine Ventilnadel auf einen Ventilschließkörper übertragen wird. Der Ventilschließkörper wirkt mit einer Ventilsitzfläche zu einem Dichtsitz zusammen. Die Rückstellung der Ventilnadel und des Ventilschließkörpers erfolgt durch eine Rückstellfeder.

Nachteilig an dem aus der DE 196 26 576 A1 bekannten Brennstoffeinspritzventil sind insbesondere die relativ langen Schließzeiten. Verzögerungen beim Schließen des Brennstoffeinspritzventils werden durch die zwischen Anker und Innenpol wirkenden Adhäsionskräfte und den nicht instantan erfolgenden Abbau des Magnetfeldes bei Ausschalten des Erregerstroms hervorgerufen. Deshalb muß die Rückstellfeder eine große Federkonstante bzw. eine große Vorspannung aufweisen. Die Rückstellkraft muß zur Erreichung kurzer Schließzeiten wesentlich größer dimensioniert werden, als es zum Dichten gegen den Brennraumdruck erforderlich wäre. Dies bedingt einen großen Leistungsbedarf der elektronischen Ansteuerschaltung.

### Vorteile der Erfindung

Das erfindungsgemäße Brennstoffeinspritzventil mit den Merkmalen des Hauptanspruchs hat demgegenüber den Vorteil, daß sich eine zusätzliche Abschaltfeder positiv sowohl auf den Öffnungs- als auch auf den Schließvorgang auswirkt. Der Öffnungsvorgang wird durch die geringere Federkraft der Rückstellfeder, welche geringere Ansteuerleistungen ermöglicht, beschleunigt, während beim Schließvorgang durch die zusätzliche Abschaltfeder eine zusätzliche Beschleunigungskraft zur Verfügung steht, um das Brennstoffeinspritzventil schnell zu schließen. Die Federkonstante der Rückstellfeder wird so dimensioniert, daß die ausgeübte Federkraft noch sicher ausreicht, um das Brennstoffeinspritzventil gegen den Druck im Brennraum der Brennkraftmaschine abzudichten. Die schnelle Beschleunigung der Ventilnadel beim Abschalten wird durch die im Vergleich zur Rückstellfeder mit großer Federkonstante dimensionierte Abschaltfeder übernommen. Die Abschaltfeder wird bei der Öffnungsbewegung nur in einem relativ kleinen Teilhub vorgespannt. Da beim Erreichen dieses Teilhubs bereits die maximale Magnetkraft aufgebaut ist, wird die Öffnungsbewegung durch die Abschaltfeder nur unwesentlich verzögert.

Auch durch die in den Unteransprüchen aufgeführten Maßnahmen sind vorteilhafte Weiterbildungen und Verbesserungen des im Hauptanspruch gegebenen Brennstoffeinspritzventils möglich.

Vorteilhaft ist die variable Ausgestaltung der Abschaltfeder, die nicht auf Schraubenfedern beschränkt ist, sondern auch als flache oder hülsenförmige Tellerfeder ausgeführt sein kann. Die Verwendung einer Tellerfeder hat den Vorteil eines rampenförmigen Kraftverlaufs.

Gleichfalls von Vorteil ist die einfache Herstellung und Montage der Bauteile, die keinen besonderen Anspruch an das Material oder das Herstellungsverfahren stellen.

### Zeichnung

Ausführungsbeispiele der Erfindung sind in der Zeichnung vereinfacht dargestellt und in der nachfolgenden Beschreibung näher erläutert. Es zeigen:
- Fig. 1: in einer Schnittdarstellung ein erstes Ausführungsbeispiel eines erfindungsgemäßen Brennstoffeinspritzventils,
- Fig. 2: in einer Schnittdarstellung ein zweites Ausführungsbeispiel eines erfindungsgemäßen Brennstoffeinspritzventils ,
- Fig. 3: in einer Schnittdarstellung ein drittes Ausführungsbeispiel eines erfindungsgemäßen Brennstoffeinspritzventils und
- Fig. 4A-4C: Diagramme des Verlaufs der Federkraft als Funktion des Hubs für die in Fig. 1 bis 3 gezeigten Ausführungsbeispiele des erfindungsgemäßen Brennstoffeinspritzventils.

### Beschreibung der Ausführungsbeispiele

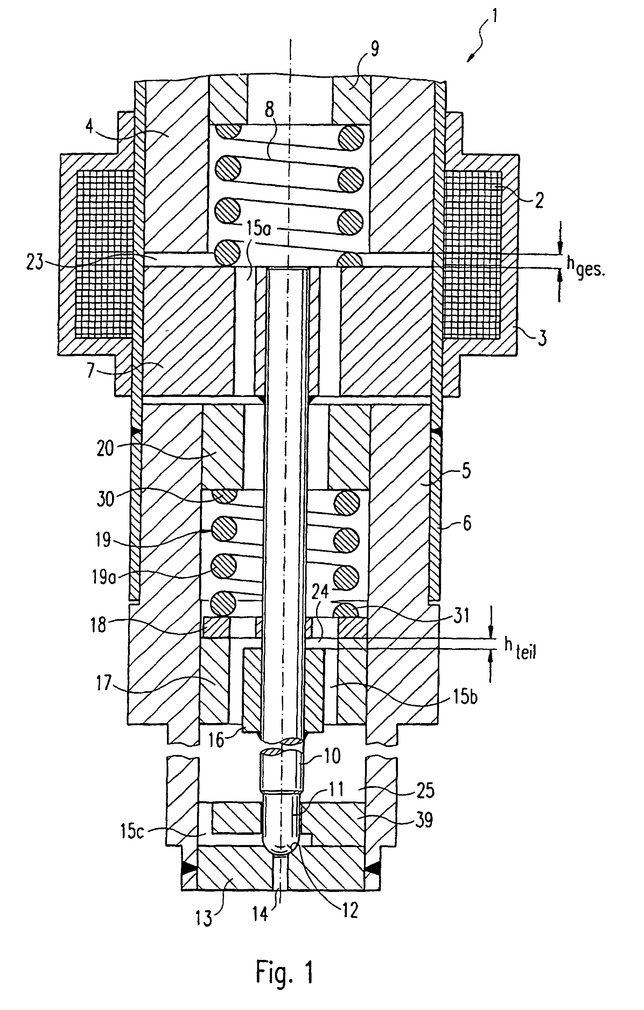

Fig. 1 zeigt in einer axialen Schnittdarstellung den abspritzseitigen Bereich eines Brennstoffeinspritzventils 1.

Ein Brennstoffeinspritzventil 1 dient zum direkten Einspritzen von Brennstoff in einen nicht dargestellten Brennraum einer fremdgezündeten, gemischverdichtenden Brennkraftmaschine und ist als nach innen öffnendes Brennstoffeinspritzventil 1 ausgeführt. Das Brennstoffeinspritzventil 1 umfaßt eine Magnetspule 2, welche von einem magnetischen Rückflußkörper 3 umgeben ist, sowie einen Innenpol 4 und einen Außenpol 5, welche von einem hülsenförmigen Ventilgehäuse 6 umgeben sind. Zwischen dem Innenpol 4 und dem Außenpol 5 ist ein Anker 7 angeordnet, der durch eine Rückstellfeder 8 beaufschlagt ist. Die Rückstellfeder 8 liegt endseitig an einer Einstellhülse 9 an, die die Rückstellfeder 8 vorspannt. Der Anker 7 steht in formschlüssiger Verbindung mit einer Ventilnadel 10, an deren abspritzseitigen Ende ein Ventilschließkörper 11 ausgebildet ist. Der Ventilschließkörper 11 bildet mit einer Ventilsitzfläche 12 einen Dichtsitz. In einem Ventilsitzkörper 13 ist mindestens eine Abspritzöffnung 14 ausgebildet. Die Ventilnadel 10 ist in einem Führungskörper 39 geführt.

Der Brennstoff wird zentral zugeleitet und über Brennstoffkanäle 15a, 15b, 15c zum Dichtsitz geführt.

Mit der Ventilnadel 10 ist ein rohrförmiger Ventilnadelanschlag 16 verschweißt. Auf einem an der Innenwandung des Außenpols 5 angebrachten Auflagering 17, welcher insbesondere in eine zentrale Ausnehmung 25 des Brennstoffeinspritzventils 1 eingepreßt sein kann, liegt ein axial verschiebbarer Ring 18, durch den die Ventilnadel 10 hindurchragt. Auf dem Ring 18 stützt sich eine Abschaltfeder 19 ab, welche durch einen ebenfalls an der Innenwand des Außenpols 5 angebrachten Federstellring 20 vorgespannt wird. Die Abschaltfeder 19 ist in dem in Fig. 1 dargestellten ersten Ausführungsbeispiel als Schraubenfeder 19a ausgebildet.

Ein Gesamthub h_{ges} entspricht der Größe eines ersten Arbeitsspaltes 23, welcher zwischen dem Anker 7 und dem Innenpol 4 ausgebildet ist. Ein Teilhub hₜₑᵢₗ entspricht der Größe eines zweiten Arbeitsspaltes 24, welcher zwischen dem Ventilnadelanschlag 16 und dem verschiebbaren Ring 18 ausgebildet ist. Im vorliegenden ersten Ausführungsbeispiel beträgt der Teilhub hₜₑᵢₗ ca. 90% des Gesamthubs h_{ges}.

Wird der Magnetspule 2 ein elektrischer Erregerstrom zugeführt, wird ein Magnetfeld aufgebaut, welches den Anker 7 in Hubrichtung an den Innenpol 4 zieht. Der Anker 7 nimmt die mit ihm verbundene Ventilnadel 10 mit. Während der Anker 7 und die Ventilnadel 10 den Teilhub hₜₑᵢₗ durchlaufen, muß die Magnetfeldstärke lediglich die Federkraft der schwach dimensionierten Rückstellfeder 8 überwinden, damit der Anker 7 in Richtung Innenpol 4 beschleunigt werden kann. Die Federkonstante der Rückstellfeder 8 ist so dimensioniert, daß die Federkraft sicher ausreicht, um das Brennstoffeinspritzventil 1 gegen den nicht dargestellten Brennraum einer Brennkraftmaschine abzudichten. Nachdem der Anker 7 und die mit ihm verbundene Ventilnadel 10 ca. 90% des Gesamthubs h_{ges} zurückgelegt haben, schlägt der Ventilnadelanschlag 16 an dem durch die Schraubenfeder 19a beaufschlagten verschiebbaren Ring 18 an. Die restlichen 10% des Gesamthubs h_{ges} müssen gegen die Federkräfte der Rückstellfeder 8 und der Schraubenfeder 19a zurückgelegt werden. Die Schraubenfeder 19a wird durch die beschleunigte Bewegung von Anker 7 und Ventilnadel 10 um die restlichen ca. 10% des Gesamthubs h_{ges} zusammengedrückt. Da sich die Federkräfte der Rückstellfeder 8 und der Schraubenfeder 19a summieren, steht am Ende des Öffnungsvorganges die Gesamtfederkraft der Rückstellfeder 8 und der Schraubenfeder 19a zum Schließen des Brennstoffeinspritzventils 1 zur Verfügung, welche bedingt durch die große Federkonstante der Schraubenfeder 19a erheblich größer ist als die im Stand der Technik durch die einzelne Rückstellfeder 8 erreichte Rückstellkraft.

Sobald sich der Anker 7 in Richtung Innenpol 4 bewegt, hebt der Ventilschließkörper 11 von der Ventilsitzfläche 12 ab und Brennstoff wird über die Abspritzöffnung 14 abgespritzt.

Wird der die Magnetspule 2 erregende elektrische Erregerstrom abgeschaltet, baut sich das Magnetfeld ab, und der Anker 7 fällt vom Innenpol 4 ab. Dies kann sehr schnell geschehen, da die Gesamtfederkraft der Rückstellfeder 8 und der Schraubenfeder 19a gemeinsam den Anker 7 in Schließrichtung beschleunigen, wodurch die Ventilnadel 10 sehr schnell in ihre Ausgangslage zurückkehren kann.

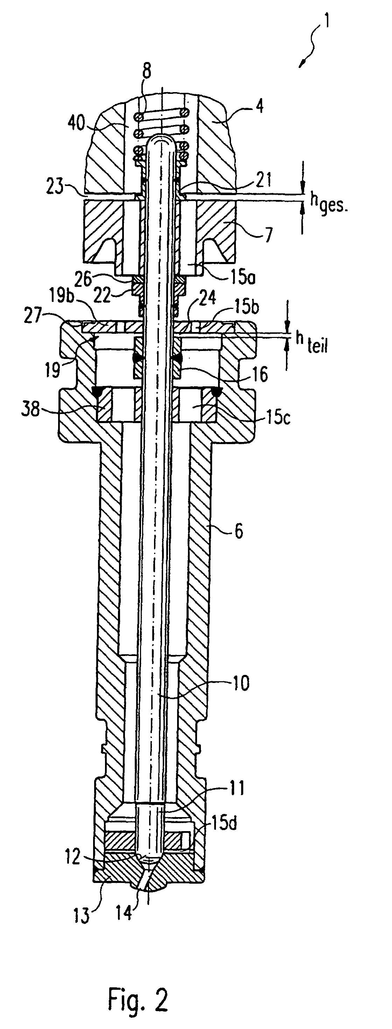

Fig. 2 zeigt in einer auszugsweisen axialen Schnittdarstellung ein zweites Ausführungsbeispiel der erfindungsgemäßen Ausgestaltung des Brennstoffeinspritzventils 1. Es werden in der Fig. 2 nur die abspritzseitigen Komponenten dargestellt, die in Bezug auf die Erfindung von wesentlicher Bedeutung sind. Bereits beschriebene Elemente sind mit übereinstimmenden Bezugszeichen versehen, so daß sich eine wiederholende Beschreibung weitgehend erübrigt.

Der Aufbau des Brennstoffeinspritzventils 1 im zweiten Ausführungsbeispiel unterscheidet sich von dem des ersten Ausführungsbeispiels insbesondere durch die Art der Abschaltfeder 19, welche in Fig. 2 als flache Tellerfeder 19b ausgeführt ist.

Das Brennstoffeinspritzventil 1 umfaßt eine in Fig. 2 nicht dargestellte Magnetspule sowie einen Innenpol 4, welcher von einem Ventilgehäuse 6 umgeben ist. Ein durch die Rückstellfeder 8 beaufschlagter Anker 7 ist in einer Ausnehmung 40 des Innenpols 4 angeordnet.

Der Anker 7 steht über eine Hülse 21 in Wirkverbindung mit der Ventilnadel 10, an deren abspritzseitigen Ende der Ventilschließkörper 11 ausgebildet ist. Der Ventilschließkörper 11 bildet mit der Ventilsitzfläche 12 einen Dichtsitz. Im Ventilsitzkörper 13 ist mindestens eine Abspritzöffnung 14 ausgebildet.

Die Rückstellfeder 8 stützt sich an der Hülse 21, welche mit der Ventilnadel 10 verschweißt ist, ab. Die Hülse 21 dient gleichzeitig als Mitnehmer für den Anker 7, der im zweiten Ausführungsbeispiel nicht mit der Ventilnadel 10 verschweißt, sondern axial verschiebbar ist. Der Anker 7 verfügt über einen abspritzseitig angeordneten Ankeranschlag 22, welcher rohrförmig ausgebildet ist und mit der Ventilnadel 10 verschweißt ist. Zwischen dem Anker 7 und dem Ankeranschlag 22 ist ein Ring 26 aus einem Elastomerwerkstoff angebracht, der ein Prellen des Ankers 7 beim Schließen des Brennstoffeinspritzventils 1 verhindert.

Die Tellerfeder 19b ist scheibenförmig ausgebildet und in einer ringförmigen Ausnehmung 27 des Ventilgehäuses 6 befestigt. Die Ventilnadel 10 durchdringt die Tellerfeder 19b und abspritzseitig ein Führungselement 38, welches der Führung der Ventilnadel 10 dient und Brennstoffkanäle 15b zur Leitung des Brennstoffes zum Dichtsitz aufweist. An der Ventilnadel 10 ist vorzugsweise durch Schweißen ein rohrförmiger Ventilnadelanschlag 16 angebracht.

Der Gesamthub h_{ges} entspricht der Größe eines ersten Arbeitsspaltes 23, welcher zwischen dem Anker 7 und dem Innenpol 4 ausgebildet ist. Der Teilhub hₜₑᵢₗ entspricht der Größe eines zweiten Arbeitsspaltes 24, welcher zwischen dem Ventilnadelanschlag 16 und der Tellerfeder 19b ausgebildet ist. Auch im vorliegenden Ausführungsbeispiel beträgt der Teilhub hₜₑᵢₗ ca. 90% des Gesamthubs h_{ges}.

Der Brennstoff wird zentral zugeleitet und über Brennstoffkanäle 15a, 15b, 15c, 15d zum Dichtsitz geleitet.

Wird der in Fig. 2 nicht dargestellten Magnetspule ein Erregerstrom zugeführt, bewegt sich der Anker 7 wie im vorherigen Ausführungsbeispiel gemeinsam mit der Ventilnadel 10, welche über die Hülse 21 von dem Anker 7 mitgenommen wird, um den Teilhub hₜₑᵢₗ, welcher ca. 90% des Gesamthubs h_{ges} beträgt, entgegen der Federkraft der Rückstellfeder 8 in Hubrichtung. Sobald der Ventilnadelanschlag 16 an der Tellerfeder 19b anschlägt, muß auf dem verbliebenen Teilstück h_{ges}-hₜₑᵢₗ, ca. 10% des Gesamthubs h_{ges}, die Gesamtfederkraft der Tellerfeder 19b und der Rückstellfeder 8 überwunden werden. Die Tellerfeder 19b kann jedoch durch die Vorbeschleunigung von Anker 7 und Ventilnadel 10 leicht verformt werden.

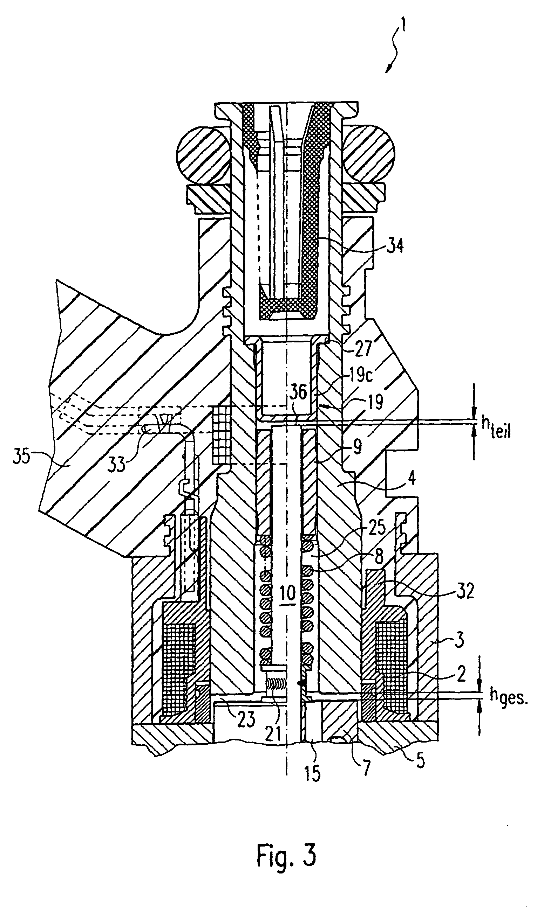

Fig. 3 zeigt in einer auszugsweisen axialen Schnittdarstellung ein drittes Ausführungsbeispiel der erfindungsgemäßen Ausgestaltung des Brennstoffeinspritzventils 1. Es sind in Fig. 3 nur die zulaufseitigen Komponenten dargestellt, die in Bezug auf die Erfindung von wesentlicher Bedeutung sind. Der abspritzseitige Teil kann ähnlich wie beim zweiten Ausführungsbeispiel gestaltet sein, es sind jedoch auch andere Bauweisen möglich.

Gegenüber den vorhergehenden Ausführungsbeispielen, in welchen die Abschaltfeder 19 in Bezug auf die Rückstellfeder 8 in Abspritzrichtung angeordnet ist, ist in Fig. 3 die Abschaltfeder 19 in Bezug auf die Rückstellfeder 8 in Zulaufrichtung angeordnet. Sie ist als hülsenförmige Tellerfeder 19c ausgebildet.

Das Brennstoffeinspritzventil 1 umfaßt eine Magnetspule 2, die auf einen Spulenträger 32 gewickelt ist. Die Magnetspule 2 baut bei Anlegen eines elektrischen Erregerstroms über eine elektrische Leitung 33 ein Magnetfeld auf. Der Anker 7 steht über die Hülse 21 mit der Ventilnadel 10 in Wirkverbindung. Auf der Hülse 21 stützt sich die Rückstellfeder 8 ab, welche durch eine in der zentralen Ausnehmung 25 des Innenpols 4 eingepreßte Einstellhülse 9 vorgespannt ist. Die Ventilnadel 10 durchdringt die Rückstellfeder 8. In zulaufseitiger Richtung schließt sich eine hülsenförmige Tellerfeder 19c als Abschaltfeder 19 an. Die hülsenförmige Tellerfeder 19c ist in einer ringförmigen Ausnehmung 27 des Innenpols 4 befestigt. Die Brennstoffzufuhr erfolgt zentral über ein Filterelement 34. Über die zentrale Ausnehmung 25 des Brennstoffeinspritzventils 1 und Brennstoffkanäle 15 wird der Brennstoff zum abspritzseitigen Ende des Brennstoffeinspritzventils 1 geleitet. Das Brennstoffeinspritzventil 1 ist von einer Kunststoffummantelung 35 umgeben, an welcher ein nicht weiter dargestellter elektrischer Steckkontakt angespritzt ist.

Der Gesamthub h_{ges} entspricht der Größe eines ersten Arbeitsspaltes 23, welcher zwischen dem Anker 7 und dem Innenpol 4 ausgebildet ist. Der Teilhub hₜₑᵢₗ entspricht der Größe eines zweiten Arbeitsspaltes 24, welcher zwischen einem Ende 36 der Ventilnadel 10 und der hülsenförmigen Tellerfeder 19c ausgebildet ist. Auch im vorliegenden dritten Ausführungsbeispiel beträgt der Teilhub hₜₑᵢₗ ca. 90% des Gesamthubs h_{ges}.

Wird der in Fig. 3 dargestellten Magnetspule 2 über die elektrische Leitung 33 ein elektrischer Erregerstrom zugeleitet, baut sich ein Magnetfeld auf, welches den Anker 7 in Hubrichtung beschleunigt. Über die Hülse 21 wird die Ventilnadel 10 mitgenommen. Während der Anker 7 die Strecke des Teilhubs hₜₑᵢₗ durchläuft, muß das Magnetfeld lediglich die Federkraft der Rückstellfeder 8 überwinden, um den Anker 7 in Richtung Innenpol 4 zu beschleunigen. Sobald das Ende 36 der Ventilnadel 10 auf die hülsenförmige Tellerfeder 19c trifft, wirken die Federkräfte der Rückstellfeder 8 und der hülsenförmigen Tellerfeder 19c zu einer Gesamtfederkraft zusammen, die durch die Vorbeschleunigung des Ankers 7 leicht überwunden wird. Zum Ende des Öffnungsvorganges des Brennstoffeinspritzventils 1 steht eine relativ große Gesamtfederkraft zum Lösen des Ankers 7 vom Innenpol 4 zur Verfügung.

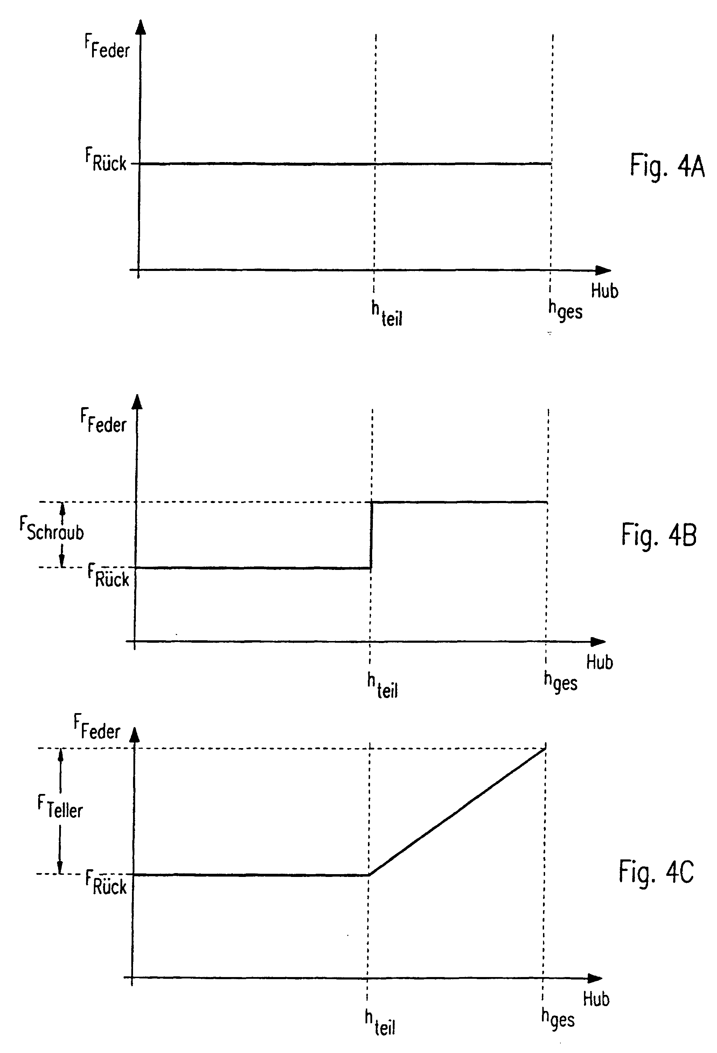

In Fig. 4A-4C sind zur Verdeutlichung der Wirkungsweise der Abschaltfeder 19 drei Diagramme dargestellt, in denen der Zusammenhang zwischen dem Hub des Ankers 7 und der Gesamtfederkraft F_{Feder} der Rückstellfeder 8 und der Abschaltfeder 19 dargelegt ist.

In den Fig. 4A-4C werden folgende Abkürzungen verwendet:
- h_{ges}: Gesamthub
- hₜₑᵢₗ: Teilhub
- F_{Feder}: Gesamtfederkraft
- F_{Rück}: Federkraft der Rückstellfeder 8
- F_{Schraub}: Federkraft der Schraubenfeder 19a
- F_{Teller}: Federkraft der Tellerfeder 19b, 19c

Fig. 4A verdeutlicht die Situation gemäß dem Stand der Technik. Die Federkraft F_{Ruck} bleibt über den Gesamthub h_{ges} konstant, da keine weitere Abschaltfeder 19 vorhanden ist. Der zurückgelegte Weg ist dabei so kurz, daß sich die Federkraft F_{Feder} über den Gesamthub h_{ges} nicht merkbar ändert. Die am Ende des Öffnungsvorgangs zum Schließen des Brennstoffeinspritzventils 1 vorhandene Federkraft ist demnach die gleiche wie die Schließkraft ohne Ventilnadelhub.

Fig. 4B zeigt das Kräfteverhältnis des ersten in Fig. 1 dargestellten Ausführungsbeispiels. Während der Anker 7 den Teilhub hₜₑᵢₗ zurücklegt, wirkt nur die Federkraft der Rückstellfeder F_{Rück}. Wenn der Ventilnadelanschlag 16 an dem verschiebbaren Ring 18 anschlägt, zieht das Magnetfeld den Anker 7 mit der Ventilnadel 10 gegen die Gesamtfederkraft F_{Feder} = F_{Rück} + F_{Schraub} an. Die Federkraft F_{Schraub} der Schraubenfeder 19a ist aufgrund der relativ geringen Federkonstante und des kleinen Hubs nahezu konstant. Während der Anker 7 den Resthub zwischen hₜₑᵢₗ und h_{ges} zurücklegt, nimmt deshalb die Gesamtfederkraft F_{Feder} sprunghaft um F_{Schraub} zu, so daß am Ende des Öffnungsvorgangs eine höhere Gesamtfederkraft F_{Feder} zum Schließen des Brennstoffeinspritzventils 1 als in Fig. 4A zur Verfügung steht.

In Fig. 4C ist die Gesamtfederkraft gemäß dem Kraftverhältnis in Fig. 2 oder Fig. 3 bei Ausführung der Abschaltfeder 19 als Tellerfeder 19b oder 19c dargestellt. Da zur Verformung der Tellerfeder 19b, 19c eine Kraft benötigt wird, die proportional mit dem Grad der Verformung schon bei geringem Hub deutlich zunimmt, steigt die Gesamtfederkraft F_{Feder} nach Anschlag des Ventilnadelanschlags 16 an der Tellerfeder 19b bzw. des Endes 26 der Ventilnadel 10 an der Tellerfeder 19c linear mit dem Hub an, während der Anker 7 den Resthub h_{ges}-hₜₑᵢₗ durchläuft, so daß am Ende des Öffnungsvorganges des Brennstoffeinspritzventils 1 eine große Gesamtfederkraft F_{Feder} zum Schließen des Brennstoffeinspritzventils 1 zur Verfügung steht.

Die Steigung der Federkraft der Tellerfeder 19b, 19c ist durch verschiedene Gestaltungsmöglichkeiten, die die Härte und das Verformungsverhalten der Tellerfeder 19b, 19c beeinflussen, wählbar.

Die Erfindung ist nicht auf die dargestellten Ausführungsbeispiele beschränkt und auch bei einer Vielzahl anderer Bauweisen von Brennstoffeinspritzventilen 1, insbesondere bei nach außen öffnenden Brennstoffeinspritzventilen 1, realisierbar.

## Patentansprüche

1. Brennstoffeinspritzventil (1) für Brennstoffeinspritzanlagen von Brennkraftmaschinen, insbesondere zum direkten Einspritzen von Brennstoff in einen Brennraum einer Brennkraftmaschine, mit einer Magnetspule (2), einem in einer Schließrichtung von einer Rückstellfeder (8) beaufschlagten Anker (7) und einer mit dem Anker (7) kraftschlüssig in Verbindung stehenden Ventilnadel (10) zur Betätigung eines Ventilschließkörpers (11), der zusammen mit einer Ventilsitzfläche (12) einen Dichtsitz bildet,
**dadurch gekennzeichnet,**
**daß** eine Abschaltfeder (19) mit der Rückstellfeder (8) so zusammenwirkt, daß sich die Federkräfte der Rückstellfeder (8) und der Abschaltfeder (19) addieren, wobei die Rückstellfeder (8) über einen Gesamthub (h_{ges}) des Ankers (7) und die Abschaltfeder (19) nur über einen Resthub (h_{ges}-hₜₑᵢₗ) des Ankers (7), welcher kleiner als der Gesamthub (h_{ges}) ist, vom Anker (7) vorgespannt wird.

2. Brennstoffeinspritzventil nach Anspruch 1,
**dadurch gekennzeichnet,**
**daß** die Federkonstante der Rückstellfeder (8) kleiner ist als die Federkonstante der Abschaltfeder (19).

3. Brennstoffeinspritzventil nach Anspruch 1 oder 2,
**dadurch gekennzeichnet,**
**daß** die Abschaltfeder (19) als Schraubenfeder (19a) ausgebildet ist.

4. Brennstoffeinspritzventil nach Anspruch 3,
**dadurch gekennzeichnet,**
**daß** die Schraubenfeder (19a) im Bereich zwischen dem Anker (7) und dem abspritzseitigen Ende des Brennstoffeinspritzventils (1) angeordnet ist.

5. Brennstoffeinspritzventil nach einem der Ansprüche 1 bis 4,
**dadurch gekennzeichnet,**
**daß** die Ventilnadel (10) mit einem rohrförmigen Ventilnadelanschlag (16) verbunden ist.

6. Brennstoffeinspritzventil nach Anspruch 5,
**dadurch gekennzeichnet,**
**daß** sich die Abschaltfeder (19) mit einem ersten Ende (30) an einem ortsfesten Federstellring (20) abstützt und mit einem zweiten Ende (31) an einem axial verschiebbaren Ring (18) anliegt.

7. Brennstoffeinspritzventil nach Anspruch 6,
**dadurch gekennzeichnet,**
**daß** der verschiebbare Ring (18) auf einem ortsfesten Auflagering (17) aufliegt.

8. Brennstoffeinspritzventil nach Anspruch 7,
**dadurch gekennzeichnet,**
**daß** die Ventilnadel (10) den Federstellring (20), die Abschaltfeder (19) und den verschiebbaren Ring (18) durchgreift.

9. Brennstoffeinspritzventil nach Anspruch 8,
**dadurch gekennzeichnet,**
**daß** im geschlossenen Zustand des Brennstoffeinspritzventils (1) zwischen dem Anker (7) und einem magnetischen Innenpol (4) ein erster Arbeitsspalt (23) vorhanden ist, welcher größer als ein zwischen dem axial verschiebbaren Ring (18) und dem Ventilnadelanschlag (16) befindlicher zweiter Arbeitsspalt (24) ist.

10. Brennstoffeinspritzventil nach Anspruch 1 oder 2,
**dadurch gekennzeichnet,**
**daß** die Abschaltfeder (19) als Tellerfeder (19b, 19c) ausgebildet ist.

11. Brennstoffeinspritzventil nach Anspruch 10,
**dadurch gekennzeichnet,**
**daß** ein mit der Ventilnadel (10) verbundener Ventilnadelanschlag (16) an der Tellerfeder (19b) anschlägt.

12. Brennstoffeinspritzventil nach Anspruch 11,
**dadurch gekennzeichnet,**
**daß** im geschlossenen Zustand des Brennstoffeinspritzventils (1) zwischen dem Anker (7) und einem magnetischen Innenpol (4) ein erster Arbeitsspalt (23) vorhanden ist, welcher größer als ein zwischen der Tellerfeder (19b) und dem Ventilnadelanschlag (16) befindlicher zweiter Arbeitsspalt (24) ist.

13. Brennstoffeinspritzventil nach Anspruch 10,
**dadurch gekennzeichnet,**
**daß** ein dem Ventilschließkörper (11) abgewandtes Ende (36) der Ventilnadel (10) an der Tellerfeder (19c) anschlägt.

14. Brennstoffeinspritzventil nach Anspruch 13,
**dadurch gekennzeichnet,**
**daß** in geschlossenem Zustand des Brennstoffeinspritzventils (1) zwischen dem Anker (7) und einem magnetischen Innenpol (4) ein erster Arbeitsspalt (23) vorhanden ist, welcher größer als ein zwischen dem Ende (36) der Ventilnadel (10) und der Tellerfeder (19c) befindlicher zweiter Arbeitsspalt (24) ist.

15. Brennstoffeinspritzventil nach Anspruch 13 oder 14,
**dadurch gekennzeichnet,**
**daß** die Tellerfeder (19c) hülsenförmig ausgebildet ist und im Bereich zwischen einem zulaufseitigen Ende des Brennstoffeinspritzventils (1) und der Rückstellfeder (8) angeordnet ist.

## Claims

1. Fuel injection valve (1) for fuel injection systems of internal combustion engines, in particular for the direct injection of fuel into a combustion chamber of an internal combustion engine, having a magnet coil (2), an armature (7) which is acted on in a closing direction by a restoring spring (8), and a valve needle (10) which is connected to the armature (7) in a force-transmitting manner and is intended for actuating a valve closing body (11) which forms a sealing seat together with a valve seat face (12), **characterized in that** a turn-off spring (19) interacts with the restoring spring (8) in such a way that the spring forces of the restoring spring (8) and of the turn-off spring (19) are added, the restoring spring (8) being prestressed by the armature (7) over a total stroke (h_{ges}) of the armature (7) and the turn-off spring (19) being prestressed by the armature (7) only over a residual stroke (h_{ges} - hₜₑᵢₗ) of the armature (7), which residual stroke (h_{ges} - hₜₑᵢₗ) is smaller than the total stroke (h_{ges}).

2. Fuel injection valve according to Claim 1, **characterized in that** the spring constant of the restoring spring (8) is smaller than the spring constant of the turn-off spring (19).

3. Fuel injection valve according to Claim 1 or 2, **characterized in that** the turn-off spring (19) is configured as a helical spring (19a).

4. Fuel injection valve according to Claim 3, **characterized in that** the helical spring (19a) is arranged in the region between the armature (7) and the ejection end of the fuel injection valve (1).

5. Fuel injection valve according to one of Claims 1 to 4, **characterized in that** the valve needle (10) is connected to a tubular valve needle stop (16).

6. Fuel injection valve according to Claim 5, **characterized in that** a first end (30) of the turn-off spring (19) is supported on a spring adjusting ring (20) which is fixed in position, and a second end (31) is in contact with an axially displaceable ring (18).

7. Fuel injection valve according to Claim 6, **characterized in that** the displaceable ring (18) rests on a supporting ring (17) which is fixed in position.

8. Fuel injection valve according to Claim 7, **characterized in that** the valve needle (10) penetrates the spring adjusting ring (20), the turn-off spring (19) and the displaceable ring (18).

9. Fuel injection valve according to Claim 8, **characterized in that**, in the closed state of the fuel injection valve (1), there is a first working gap (23) between the armature (7) and a magnetic internal pole (4), which first working gap (23) is larger than a second working gap (24) which is situated between the axially displaceable ring (18) and the valve needle stop (16).

10. Fuel injection valve according to Claim 1 or 2, **characterized in that** the turn-off valve (19) is configured as a disc spring (19b, 19c).

11. Fuel injection valve according to Claim 10, **characterized in that** a valve needle stop (16) which is connected to the valve needle (10) strikes against the disc spring (19b).

12. Fuel injection valve according to Claim 11, **characterized in that**, in the closed state of the fuel injection valve (1), there is a first working gap (23) between the armature (7) and a magnetic internal pole (4), which first working gap (23) is larger than a second working gap (24) which is situated between the disc spring (19b) and the valve needle stop (16).

13. Fuel injection valve according to Claim 10, **characterized in that** one end (36) of the valve needle (10) facing away from the valve closing body (11) strikes against the disc spring (19c).

14. Fuel injection valve according to Claim 13, **characterized in that**, in the closed state of the fuel injection valve (1), there is a first working gap (23) between the armature (7) and a magnetic internal pole (4), which first working gap (23) is larger than a second working gap (24) which is situated between the end (36) of the valve needle (10) and the disc spring (19c).

15. Fuel injection valve according to Claim 13 or 14, **characterized in that** the disc spring (19c) is of sleeve-shaped design and is arranged in the region between an inlet-side end of the fuel injection valve (1) and the restoring spring (8).

## Revendications

1. Injecteur de carburant (1) pour une installation d'injection de carburant d'un moteur à combustion interne notamment pour l'injection directe de carburant dans la chambre de combustion d'un moteur à combustion interne comprenant une bobine magnétique (2), un induit (7) sollicité par un ressort de rappel (8) dans le sens de la fermeture et une aiguille d'injecteur (10) coopérant par une liaison de force avec l'induit (7) pour actionner un organe d'obturation de soupape (11) formant un siège d'étanchéité avec une surface de siège d'étanchéité (12),
**caractérisé en ce qu'**
un ressort de coupure (19) coopère avec le ressort de rappel (8) pour que la force développée par le ressort de rappel (8) et celle du ressort de coupure (19) s'additionnent, le ressort de rappel (8) étant précontraint sur toute la course (hₜₒₜ) de l'induit (7) et le ressort de coupure (19) n'étant précontraint que pour une course résiduelle (hₜₒₜ-hₚₐᵣₜ) de l'induit (7), course résiduelle inférieure à la course totale (hₜₒₜ) de l'induit (7).

2. Injecteur selon la revendication 1,
**caractérisé en ce que**
la constante du ressort de rappel (8) est inférieure à la constante du ressort de coupure (19).

3. Injecteur selon l'une des revendications 1 ou 2,
**caractérisé en ce que**
le ressort de coupure (19) est réalisé sous la forme d'un ressort hélicoïdal (19a).

4. Injecteur selon la revendication 3,
**caractérisé en ce que**
le ressort hélicoïdal (19a) est placé dans la zone comprise entre l'induit (7) et l'extrémité de l'injecteur (1) à l'opposé du côté d'éjection.

5. Injecteur selon l'une des revendications 1 à 4,
**caractérisé en ce que**
l'aiguille (10) de l'injecteur est reliée à une butée d'aiguille d'injecteur (16) de forme tubulaire.

6. Injecteur selon la revendication 5,
**caractérisé en ce que**
le ressort de coupure (19) s'appuie par une première extrémité (30) contre une bague de réglage de ressort (20), fixe, et par sa seconde extrémité (31) contre une bague (18) coulissante axialement.

7. Injecteur selon la revendication 6,
**caractérisé en ce que**
la bague coulissante (18) s'appuie contre une bague d'appui (17) fixe.

8. Injecteur selon la revendication 7,
**caractérisé en ce que**
l'aiguille d'injecteur (10) traverse la bague de réglage de ressort (20), le ressort de coupure (19) et la bague coulissante (18).

9. Injecteur selon la revendication 8,
**caractérisé en ce que**
lorsque l'injecteur (1) est fermé, il y a entre l'induit (7) et un pôle magnétique intérieur (4), un premier intervalle de travail (23) supérieur à un second intervalle de travail (24) subsistant entre l'anneau (18) coulissant axialement et la butée d'aiguille d'injecteur (16).

10. Injecteur selon les revendications 1 ou 2,
**caractérisé en ce que**
le ressort de coupure (19) est en forme de ressort Belleville (19b, 19c).

11. Injecteur selon la revendication 10,
**caractérisé en ce qu'**
une butée d'aiguille (16) reliée à l'aiguille d'injecteur (10) vient contre le ressort Belleville (19b).

12. Injecteur selon la revendication 11,
**caractérisé en ce que**
lorsque l'injecteur (11) est fermé, il y a un premier intervalle de travail (23) entre l'induit (7) et le pôle intérieur magnétique (4), cet intervalle étant supérieur à un second intervalle de travail (24) existant entre le ressort Belleville (19b) et la butée d'aiguille d'injecteur (16).

13. Injecteur selon la revendication 10,
**caractérisé en ce que**
l'extrémité (36) de l'aiguille d'injecteur (10), à l'opposé de l'organe d'obturation de soupape (11), vient buter contre le ressort Belleville (19c).

14. Injecteur selon la revendication 13,
**caractérisé en ce que**
lorsque l'injecteur (1) est fermé, il y a un premier intervalle de travail (23) entre l'induit (7) et le pôle magnétique intérieur (4), cet intervalle étant supérieur à un second intervalle de travail (24) existant entre l'extrémité (36) de l'aiguille d'injecteur (10) et le ressort Belleville (19c).

15. Injecteur selon les revendications 13 ou 14,
**caractérisé en ce que**
le ressort Belleville (19c) est en forme de manchon placé entre l'extrémité côté alimentation de l'injecteur (1) et le ressort de rappel (8).
